# EUROPÄISCHE PATENTSCHRIFT

(11) **EP 3 819 333 B1**
(45) Veröffentlichungstag und Bekanntmachung des Hinweises auf die Patenterteilung: **22.02.2023**
(21) Anmeldenummer: 19207585.1
(22) Anmeldetag: 07.11.2019
(51) Int. Cl.: C08J 9/224, C08J 9/16, C08J 9/228, B29B 9/06, B29C 44/22, B29C 44/50, B29C 48/16, B29C 48/21, B29C 48/345, B29C 48/04

(54) **SCHAUMPERLE, AUS EINER VIELZAHL VON SCHAUMPERLEN GEBILDETES FORMTEIL UND VERFAHREN ZUR HERSTELLUNG VON SCHAUMPERLEN**
FOAMED SPHERES, MOULDED PART FORMED FROM A PLURALITY OF FOAMED SPHERES AND METHOD FOR PRODUCING FOAMED SPHERES
PERLES DE MOUSSE, PIÈCE MOULÉE FORMÉE D'UNE PLURALITÉ DE PERLES DE MOUSSE ET PROCÉDÉ DE FABRICATION DE PERLES DE MOUSSE

(43) Veröffentlichungstag der Anmeldung: 12.05.2021
(73) Patentinhaber: Seitner, Rouven, 60322 Frankfurt (DE)
(72) Erfinder: Seitner, Rouven, 60322 Frankfurt (DE)
(74) Vertreter: Tergau & Walkenhorst Patentanwälte PartGmbB

(56) Entgegenhaltungen:
- EP-A1- 2 824 136
- EP-A2- 2 428 532
- DE-A1- 19 728 879
- DE-A1-102007 033 312
- DE-A1-102011 085 026
- US-A- 3 903 233
- US-A1- 2016 160 000

## Beschreibung

Die Erfindung betrifft Schaumperlen, insbesondere zur Herstellung von Formteilen, und ein aus einer Vielzahl von Schaumperlen gebildetes Formteil. Sie bezieht sich weiter auf ein Verfahren zur Herstellung von derartigen Schaumperlen.

Schaumperlen oder Kugeln aus geschäumtem Kunststoff, allgemein auch als "Beads" bezeichnet, werden in einer Vielzahl von Anwendungen beispielsweise zur Herstellung von Formteilen verwendet, wobei die Formteile aus einer Vielzahl derartiger, miteinander versinterter oder verschweißter Schaumperlen gebildet werden. Sie bieten dabei eine besonders gute Basis für eine allgemein angestrebte Leichtbauweise, da sie einerseits eine vergleichsweise hohe mechanische Stabilität und andererseits - aufgrund des hohen Luftanteils im Material infolge der Aufschäumung - eine sehr niedrige Dichte aufweisen.

Derartige Beads oder Schaumperlen werden üblicherweise aus verschiedenartigen Polymeren als Basismaterial hergestellt. Beispielsweise sind EPS, EPP, EPE, Copolymere und Mischungen daraus (Blends) als Beads erhältlich. Derartige Schaumperlen werden üblicherweise in Formteilautomaten zu Formteilen, Platten oder Blöcken weiterverarbeitet, die in der Dämmstoff-, Automobil- oder Verpackungsindustrie oder auch in anderen technischen Anwendungen zum Einsatz kommen können.

Besonders gängig sind derzeit Schaumperlen oder Beads aus EPS (Expandiertes Polystyrol) oder EPP (expandiertes Polypropylen). EPS-Beads (Hartschaum) werden üblicherweise ungeschäumt als vorbegastes Polystyrol im Markt angeboten und von Endverarbeitern, insbesondere sogenannten Schäumbetrieben, mit Hilfe von Dampf zu Schaumkugeln verschiedener Dichte expandiert und dann in den Formteilautomaten verarbeitet. Im Bereich EPP (Weichschaum) werden hingegen so genannte Minipellets aus Polypropylen bereits beim Rohstofflieferanten auf die für den späteren Einsatz vorgesehene und geeignete Dichte expandiert, beispielsweise in einem Autoklav oder mittels Extrusionsverfahren mit direkter Begasung. Die dabei entstehenden geschäumten Kugeln oder Schaumperlen enthalten kein weiteres Treibmittel mehr und können direkt per Staudruckverfahren verarbeitet werden. Für geringe Dichten, d. h. im Sinne einer möglicherweise angestrebten extremen Leichtbauweise, können die Perlen mit Luftdruck nachbeladen (Druckerhöhung in den Schaumzellen) und ebenfalls mit Dampf nachexpandiert werden.

Die anschließende Verarbeitung im so genannten Formteilprozess findet üblicherweise in speziellen Formteilautomaten statt. Der eigentliche Verarbeitungsschritt besteht dabei darin, die Schaumpartikel mittels Dampfs (Dampftemperatur ca. 140 bis 165 °C - je nach Rohmaterialtyp) zumindest oberflächlich zu erweichen, damit sie versintern oder verschmelzen. Eine nachträgliche Bearbeitung (z. B. Entgraten) ist, anders als bei PUR-Schaumstoffteilen, bei EPP-Formteilen nicht üblich.

In der Vielzahl möglicher Anwendungen solcher aus miteinander versinterten oder verschweißten Schaumperlen gebildeten Formteile stehen üblicherweise jeweils individuell andere Materialeigenschaften im Vordergrund, die den Einsatz besonders attraktiv machen. Bei einer Verwendung als Dämmstoff, beispielsweise in Heizungen als Manschetten für Heizungsrohre oder Isolierung von Bauteilen, ist die flexible Formgebung in Kombination mit - aufgrund des hohen Luftanteils in den geschäumten Perlen - guten thermischen Isolationseigenschaften bedeutsam. Bei einem Einsatz als Formteil in der Automobilindustrie, beispielsweise als Füllerelement in Karosserieteilen, steht üblicherweise im Sinne der allgemein angestrebten Leichtbauweise in Kombination mit der ebenfalls allgemein angestrebten hohen passiven Sicherheit, die geringe Dichte in Kombination mit einer vergleichsweise hohen Schockabsorption im Vordergrund. Ein wiederum anderes Anwendungsspektrum bietet der Schaumstoff EPP, der vergleichsweise elastisch, stoßsicher und besonders angenehm anzufassen ist.

Limitiert ist das Anwendungsspektrum im Wesentlichen durch die Materialeigenschaften des für die Schaumperlen verwendeten Kunststoffs selbst, da über diesen beispielsweise sowohl die Festigkeit und Formstabilität des Formteils (über die Festigkeit und Stabilität der Sinter- oder Schweißverbindung zwischen den Schaumperlen) als auch die thermischen und mechanischen Eigenschaften des Volumenkörpers (über den Volumen- bzw. Gewichtsanteil von Luftgehalt bzw. Kunststoffanteil in der geschäumten Perle) vorgegeben sind. Es besteht dabei das allgemeine Ziel, die Anzahl möglicher Anwendungen noch mehr als bisher zu erweitern und im Hinblick auf die große Anzahl positiver Eigenschaften solcher Schaumperlen deren Verwendungsmöglichkeiten noch mehr als bisher zu erweitern.

Aus der EP 2 824 136 A1 ist eine Schaumperle mit einer zweikomponentigen Struktur bekannt, bei der ein von einem ersten Kunststoff gebildeter Kern von einem von einem zweiten Kunststoff gebildeten Mantel umgeben ist. Der erste Kunststoff enthält dabei Polypropylen, und der zweite Kunststoff enthält eine Mischung aus Polypropylen und Polyethylen, wobei beide Kunststoffe unterschiedliche Schmelzpunkte haben.

Der Erfindung liegt nunmehr die Aufgabe zugrunde, eine Schaumperle der oben genannten Art anzugeben, mit der die Möglichkeiten der Weiterverarbeitung der Schaum perlen noch weiter verbessert ist und die, gerade auch nach der Verarbeitung in ein entsprechendes Formteil, auch für neuartige, bislang nicht bekannte Anwendungen geeignet ist. Des Weiteren sollen ein aus solchen Schaumperlen hergestelltes Formteil sowie ein Verfahren zur Herstellung solcher Schaumperlen angegeben werden.

Bezüglich der Schaumperle wird diese Aufgabe erfindungsgemäß gelöst mit den Merkmalen des Anspruchs 1.

Die Erfindung geht dabei von der Überlegung aus, dass das Anwendungsspektrum für aus versinterten oder verschweißten Schaumperlen gebildeten Formteilen im Wesentlichen durch zwei Aspekte der Schaumperlen charakterisiert ist: zum einen sind die Volumeneigenschaften der jeweiligen Schaumperlen, also die Materialeigenschaften des verwendeten Kunststoffs in Kombination mit dem Luftanteil, maßgebend beispielsweise für die Dichte (und damit letztlich das Gewicht des Formteils) oder die thermische Leitfähigkeit des Formteils. Andererseits bestimmen die Oberflächeneigenschaften der Schaumperle die Festigkeit des Sinteroder Schweißverbunds und damit die mechanische Festigkeit und Belastbarkeit des Formteils insgesamt. Anwendungsmöglichkeiten und die Einsetzbarkeit spezifischer Materialien überhaupt sind dabei unter anderem dadurch limitiert, dass bei herkömmlicher Bauweise der eingesetzte Kunststoff sowohl die Anforderungen an die Volumeneigenschaften als auch die Anforderungen an die Oberflächeneigenschaften, also die Festigkeit der Sinterverbindung oder auch die Einsetzbarkeit in üblicher Prozesstechnik, erfüllen musss.

Dem wird vorliegend durch einen Aufbau der Schaumperlen Rechnung getragen, der eine materialseitige oder auch funktionale Trennung oder Entkopplung des Volumens einerseits und der Oberfläche andererseits erlaubt. Dazu ist vorgesehen, einen Kern für die Schaumperle bereitzustellen, der für die Volumeneigenschaften prägend ist, der aber in der Art einer hybriden oder zweikomponentigen Ausführung zumindest teilweise von einem Mantel aus einem anderen Material umgeben sein soll. Dieses kann im Hinblick auf die Herstellung und/oder Festigkeit der angestrebten Sinterverbindung zwischen den Perlen geeignet gewählt werden, ohne dass hieraus Einschränkungen für die Materialwahl des Kerns in Kauf genommen werden müssten.

Als besonders wichtige Materialeigenschaft bei der Auswahl der Materialien für den Kern einerseits und den Mantel andererseits wird dabei der Schmelzpunkt angesehen, da dieser gerade für den Mantel im Hinblick auf den vorgesehenen Versinterungsprozess bedeutsam ist. Als Schmelztemperatur bezeichnet man die Temperatur, bei der ein Stoff schmilzt, das heißt vom festen in den flüssigen Aggregatzustand übergeht. Die Schmelztemperatur ist üblicherweise abhängig vom Stoff, im Gegensatz zur Siedetemperatur aber nur sehr wenig vom Druck (Schmelzdruck). Schmelztemperatur und Druck werden zusammen als Schmelzpunkt bezeichnet, wobei dieser den Zustand eines Reinstoffes beschreibt und Teil der Schmelzkurve im Phasendiagramm des Stoffes ist.

Der Schmelzpunkt des den Mantel bildenden zweiten Kunststoffs bei einem Umgebungsdruck von etwa 1 bis 5 bar, insbesondere in der für die Weiterverarbeitung üblicherweise vorgesehenen Dampfatmosphäre, ist dabei mindestens etwa 90°, niedriger ist als der Schmelzpunkt des den Kern bildenden ersten Kunststoffs. Damit ist aufgrund der Spreizung der Materialparameter eine zuverlässige Versinterung oder Verschweißung der Schaumperlen gerade auch bei in Anlagenprozessen gängigen Prozessparametern wie Temperatur und Druck (beispielsweise des eingesetzten Prozessdampfs) miteinander ermöglicht, selbst wenn der die Bulkoder Volumeneigenschaften prägende, für den Kern eingesetzte Kunststoff beispielsweise aufgrund eines vergleichsweise hohen Schmelzpunkts unter solchen Bedingungen eigentlich gar nicht einsetz- oder verarbeitbar wäre.

Vorteilhafte Ausgestaltungen der Erfindung sind Gegenstand der Unteransprüche.

In ganz besonders bevorzugter, als eigenständig erfinderisch angesehener Ausgestaltung ist der den Kern bildende erste Kunststoff ein Polyester, besonders bevorzugt auf Basis von Polyethylenterephthalat (PET). PET eignet sich nämlich hervorragend für Recycling-Prozesse, weshalb neben erstmals erzeugtem PET auch Recycle-PET zur Herstellung mannigfaltiger Produkte verwendet werden kann. Auf dem Markt spielen aus PET hergestellte Produkte eine große Rolle, und insbesondere in der Getränkeindustrie und Verpackungsindustrie, in der leichtgewichtige Flaschen und Verpackungsfolien benötigt werden, wird bevorzugt PET eingesetzt. Im Falle des Recyclings werden PET-Flaschen und PET-Folien zerkleinert und das dabei entstehende Granulat zur Herstellung neuer Flaschen, Platten oder Folien verwendet. Das recycelte Material kann aber auch zur Herstellung anderer Kunststoff-Teile dienen, zum Beispiel PET in Form von geschäumten Platten. Im Vergleich zu ähnlichen, schäumbaren Kunststoffen, aus denen unter Verwendung von Beads Formteile hergestellt werden können, weist PET zudem auch noch eineseits eine bessere thermische Isolationswirkung und andererseits im geschäumten Zustand eine deutlich höhere Druckfestigkeit im Vergleich beispielsweise zu EPP oder EPS auf, so dass gerade bei der Herstellung beispielsweise von Dämmkörpern die Verwendung von PET besonders attraktiv wäre. Die Verwendung von PET als Grundmaterial in Schaumperlen ist somit insgesamt gesehen bereits an sich hoch attraktiv. Ein Verfahren zur Herstellung eines PET-Granulats ist beispielsweise aus der WO 2011/063806 A1 bekannt.

Allerdings weist PET einen Schmelzpunkt von 260°C auf. Ein Einsatz in der gängigen Anlagentechnik bei der Herstellung von Formteilen aus Schaumperlen oder Beads ist daher nicht möglich oder zumindest kommerziell nicht umsetzbar, denn in der derzeit üblichen Anlagentechnik im Bereich Formteilherstellung (beispielsweise für EPP-Schaumperlen) werden vorwiegend Temperaturen im Bereich von 120°C bis 150°C eingesetzt. Die Verschweißung der Beads wird auch dabei üblicherweise mit Hilfe von Dampf vorgenommen; typische Dampfdrücke liegen dabei etwa bei 3,6 bar. Eine Behandlung von PET-Schaumperlen wird bei derartigen Temperaturen eine Expansion bewirken, nicht aber eine Verschweißung. Für eine Verschweißung wären vielmehr Temperaturen über 200°C notwendig, welche Dampfdrücke von 20 bar und mehr zur Folge hätte.

Daher ist der Einsatz von PET-Beads oder -Schaumperlen im Hinblick auf die derzeit gängige Anlagentechnik an sich nicht möglich. Durch die erfindungsgemäß nunmehr vorgesehene Bereitstellung von Schaumperlen mit einem von einem Mantel umgebenen Kern werden diese Probleme überwunden, und es wird der Einsatz von PET in Schaumperlen auch in gängiger Anlagentechnik erschlossen. Allein die Bereitstellung von PET als zusätzliche Option bei der Materialwahl für die Herstellung von Schaumperlen erweitert das Anwendungsspektrum beträchtlich.

In weiterer ganz besonders bevorzugter Ausgestaltung, insbesondere und besonders bevorzugt in Kombination mit der Materialwahl von PET als Basismaterial für den Kern, ist der den Mantel bildende zweite Kunststoff ein Kunststoff auf Basis von Polypropylen (PP). Damit ist sichergestellt, dass der für die Versinterung oder Verschweißung der Schaumperlen miteinander relevante Oberflächenbereich von seinen Eigenschaften her mit dem von herkömmlichen EPP-Beads oder -Schaumperlen vergleichbar ist; die konventionelle, für die Verarbeitung von EPP-Beads gängige und etablierte Anlagentechnik einschließlich der gängigen oder bevorzugten Betriebsparameter ist somit ohne weiteres auch für die nun vorgesehenen hybriden oder mehrkomponentigen Schaumperlen anwendbar. PP weist einen Schmelzpunkt von etwa 160°C auf, EPP hingegen von etwa 140°C, so dass das Versintern oder Verschweißen der ganz besonders bevorzugt vorgesehenen und als eigenständig erfinderisch angesehenen PP- oder EPP-ummantelten PET-Schaumperlen bei den üblicherweise vorgesehenen und anlagentechnisch auch weitgehend umgesetzten Temperaturen von 120°C bis 150°C stattfinden kann. Die Differenz der Schmelzpunkte zwischen den besonders bevorzugten Materialpaaarungen mit PET für den Kern und PP bzw. EPP für den Mantel beträgt somit etwa 100 - 125 K (für PET-PP) bzw. 120 - 145 K (für PET-EPP).

Der den Kern umgebende Mantel der Schaumperle hat die wesentliche funktionale Aufgabe, die Versinterung oder Verschweißung der Schaumperlen miteinander unter gängigen Anlagenbedingungen und Prozessparametern zu ermöglichen und dabei eine hinreichende Formstabilität und mechanische Belastbarkeit des Sinterkörpers zu gewährleisten. Hierzu ist es denkbar und möglich, dass der Mantel den Kern nicht vollständig umschließt oder bedeckt; vielmehr kann es ausreichend sein, die Oberfläche nur insoweit mit einem Mantel zu versehen, dass in jedem Fall auch bei einer statistischen Positionierung einer Vielzahl von Schaumperlen relativ zueinander eine ausreichende stoffseitige Verbindung zueinander benachbarter Schaumperlen miteinander gewährleistet ist. Vorteilhafterweise bedeckt der Mantel die Oberfläche des Kerns somit zu mindestens 70%.

Des Weiteren ist in besonders vorteilhafter Ausgestaltung, ebenfalls im Hinblick auf die vorgesehene funktionale Aufgabe des Mantels, dass dieser die Versinterung oder Verschweißung der Schaumperlen miteinander ermöglichen soll, die Schichtdicke des Mantels geeignet gewählt. Dabei sollte bei der Parameterwahl für die Auslegung der Schichtdicke des Mantels besonders bevorzugt berücksichtigt sein, dass dieser eine ausreichende Materialstärke aufweist, um eine intensive und belastbare stoffschlüssige Verbindung zwischen benachbarten Schaumperlen zu ermöglichen, wobei andererseits der Volumenbeitrag des Mantels ausreichend gering gehalten sein sollte, so dass die Volumeneigenschaften unverändert durch das Material des Kerns dominiert oder bestimmt werden. In besonders vorteilhafter Ausgestaltung weist der Mantel dabei eine Schichtdicke von 0,1 bis 0,5 mm auf.

In dieser besonders bevorzugten und als eigenständig erfinderisch angesehenen Ausgestaltung eines mit PP-Ummantelung versehenen PET-Kerns, insbesondere gemäß dem nachfolgend beschriebenen Verfahren erhältlich als PET-Schaumzylinder mit PP-Ummantelung, können die in der Art eines Zwischenprodukts für eine nachfolgende Weiterverarbeitung bereitgestellten Schaumperlen unter Rückgriff auf ohnehin vorhandene Anlagentechnik zwischengelagert und ggf. mit Umgebungsluft unter Druck beladen werden. Das geschäumte zylinderförmige Granulat kann anschließend oder zu einem späteren Zeitpunkt mit herkömmlicher EPP-Anlagentechnik weiterverarbeitet werden. Insbesondere ist die vorhandene Dampfdruck- und Maschinentechnik ausreichend, um den PET-Schaumstoff zu expandieren und gleichzeitig aufgrund der Verschweißung in der PP-Ummantelung einen gut verschweißten Partikelschaumblock zu erhalten.

Bezüglich des Formteils wird die genannte Aufgabe gelöst, indem es gebildet ist aus einer Vielzahl von oberflächlich miteinander versinterten oder verschweißten Schaumperlen der vorgenannten Art. Insbesondere ist bei einem erfindungsgemä-βen Formteil eine Vielzahl von aus einem ersten Kunststoff gebildeten geschäumten Kunststoffkörpern in eine von einem zweiten Kunststoff gebildete Matrix eingebettet. Unter Verwendung der vorgenannten Schaumperlen bei der Herstellung eines solchen Formteils wird die Verbindung der Schaumperlen miteinander über das Verschweißen der Mantelschichten miteinander bewirkt; die Mantelschichten bilden dabei bevorzugt im Ergebnis eine Matrix, in die die ursprünglichen Kerne der Schaumperlen als separate Kunststoffkörper eigebettet sind.

Vorteilhafterweise weist dabei in zur vorgenannten Ausgestaltung der Schaumperlen analoger Ausführung der die Matrix bildende zweite Kunststoff einen niedrigeren Schmelzpunkt, vorzugsweise bei einem Umgebungsdruck von etwa 1 bar einen mindestens etwa 60°C, besonders bevorzugt mindestens etwa 90°, niedrigeren Schmelzpunkt auf als der die Kunststoffkörper bildende erste Kunststoff.

Besonders bevorzugt und in als eigenständig erfinderisch angesehener Ausgestaltung werden die vorstehend definierten Schaumperlen und/oder das vorstehend beschriebene Formteil verwendet im/als Dämmstoff für Sanitär- Heizungs- oder Lüftungstechnik (Warmwasserrohrisolierung, Heizkesssel, Gussteile), Dämmstoff für Automobilbau (Schall- und wärmedämmende Teile wie z.b. Motorraumabtrennungen, Radkästen), Crashschutz für Automobilbau (Stoßfänger), und/oder Crashschuz für Schutzausrüstungen (Helme, Knieschoner).

Bezüglich des Verfahrens zur Herstellung von Schaumperlen der oben genannten Art wird die genannte Aufgabe erfindungsgemäß gelöst, indem eine Schmelze eines ersten Kunststoffs, besonders bevorzugt PET, mit einem Treibmittel oder Treibmittelgemisch und gegebenenfalls Additiven vermischt und für eine nachfolgende Extrusion bereitgestellt wird, wobei die Extrusion in einer Coextrusion erfolgt, bei der der aus einer Lochdüse austretende geschäumte erste Kunststoff expandiert und dabei von einem aus einer die Lochdüse zumindest teilweise umgebenden Ringdüse austretenden zweiten Kunststoff, besonders bevorzugt PP, ummantelt wird, wobei der dabei entstehende, von einer Folie aus dem zweiten Kunststoff ummantelte Strang des ersten Kunststoffs nach Abkühlung in Zylinder geschnitten wird.

Besonders bevorzugt wird somit bei der Coextrusion, bei der aus einer zentralen Lochdüse geschäumter PET-Schaumkunststoff austritt und dabei expandiert, um den entstehenden Strang aus geschäumtem PET schlauchförmig ein Kunststoffilm aus Polypropylen ausgebracht, der den PET-Strang ummantelt. Aufgrund der beim Austritt des PET-Strangs aus der Lochdüse noch vergleichsweise hohen Prozesstemperatur wird die PP-Ummantelung dabei fest mit dem geschäumten PET-Strang verschweißt, so dass bevorzugt eine innige stoffschlüssige Verbindung zwischen dem den Kern bildenden geschäumten PET und dem den Mantel bildenden PP entsteht. Nach der Abkühlung werden die coextrudierten Stränge vorteilhafterweise in der Art eines so genannten Kaltabschlags in Zylinder geschnitten, die die Schaumperlen bilden.

Vorteilhafterweise wird dabei als zweiter Kunststoff ein Kunststoff verwendet, der einen niedrigeren Schmelzpunkt aufweist als der erste Kunststoff.

Alternativ und in als eigenständig erfinderisch angesehener Ausgestaltung wird die genannte Aufgabe bezüglich des Verfahrens gelöst, indem eine Schmelze eines ersten Kunststoffs, vorteilhaftweise PET, mit einem Treibmittel oder Treibmittelgemisch und gegebenenfalls Additiven vermischt und anschließend extrudiert und dabei expandiert wird, wobei der entstandene Kunststoff-Schaum-Strang in einem Ummantelungsschritt durch ein Behandlungsbecken geführt wird, in dem ein zweiter Kunststoff, bevorzugt Polypropylen, in hoch viskoser Form bereitgestellt wird.

Vorteilhafterweise werden die Prozessparameter, insbesondere die Prozesstemperatur, dabei wiederum derart gewählt, dass sich beim Durchführen des geschäumten PET-Strangs durch das PP-Bad eine PP-Ummantelung auf der Oberfläche des PET-Strangs abscheidet und aufgrund der vergleichsweise hohen Temperaturen mit diesem fest verschweißt wird. In ganz besonders bevorzugter Weiterbildung wird der Strang aus geschäumtem Kunststoff in im Wesentlichen senkrechter Richtung aus dem Behandlungsbecken herausgeführt, so dass schwerkraftbedingt überschüssige noch auf der Oberfläche des Strangs befindliche Restmengen in das Behandlungsbecken zurücklaufen und dort zur weiteren Beschichtung zur Verfügung stehen.

In noch weiterer alternativer und ebenfalls als eigenständig erfinderisch angesehener Ausgestaltung wird die genannte Aufgabe bezüglich des Verfahrens gelöst, indem eine Schmelze eines ersten Kunststoffs, vorteilhaftweise PET, mit einem Treibmittel oder Treibmittelgemisch und gegebenenfalls Additiven vermischt, wobei die mit dem Treibmittel beladene Polymerschmelze in einem Ummantelungsschritt durch einen Fließkanal geführt wird, in dem eine Schmelze eines zweiten Kunststoffs bereitgestellt wird und die mit dem Treibmittel beladene Polymerschmelze umströmt, wobei die dabei entstehende ummantelte Schmelze anschließend extrudiert und dabei expandiert wird.

Die mit der Erfindung erzielten Vorteile bestehen insbesondere darin, dass durch die zweikomponentige Ausgestaltung der Schaumperle eine funktionale Trennung zwischen dem Kern einerseits und dem die Oberfläche bildenden Mantel andererseits ermöglicht ist, so dass der Kern hinsichtlich seiner Ausführung, beispielsweise Materialwahl oder Luftanteil, gezielt an die volumenbezogenen Erfordernisse angepasst werden kann. Unabhängig davon kann der Mantel gezielt an die oberflächenspezifischen Erfordernisse, insbesondre gutes Sinterverhalten und/oder hohe Festigkeit nach dem Versintern oder Verschweißen der Schaumperlen angepasst sein kann, ohne dass hierfür Nachteile im Volumenbereich in Kauf genommen werden müssten. Insbesondere ermöglicht der erfindungsgemäße Aufbau die Einbeziehung neuer Materialien, ganz besonders bevorzugt PET, unter Beibehaltung der etablierten und bereits vorhandenen Anlagentechnik für die Weiterbearbeitung.

Insbesondere in der als eigenständig erfinderisch angesehenen Ausführung einer PP-ummantelten PET-Schaumstoffperle, bei der der Kern aus PET und der Mantel aus PP ausgeführt ist, werden u. a. folgende Vorteile erreicht:
- Die Schaumperlen (beispielsweise in der erwähnten zylindrischen Form) kann je nach Bedarf auch in relativ hohen Dichten im Bereich 100 - 300 kg/m³ hergestellt werden.
- Der PET-Schaumkern kann bei Bedarf im Vorschäumverfahren bei Temperaturen um die 120°C vorgeschäumt werden, ohne dass der PP-Mantel eine Verschweißung der Schaumperlen verursachen würde.
- Die Schaumperlen oder Beads können, unter Rückgriff auf vorhandene Anlagentechnik und Betriebsparameter, wie herkömmliche EPS- oder EPP-Schaumperlen zwischengelagert und ggf. mit Pressluft beladen werden.
- Die Schaumperlen oder Beads können herkömmlichen EPP-Formteilanlagen zugeführt und mit Dampf im gängigen Temperaturbereich von etwa 150°C verschäumt und/oder verschweißt werden.
- Die EPP-Schaumindustrie wäre in der Lage, mit bestehender Technik E-PET zu verarbeiten und neue Anwendungsbereiche zu erschließen.

Ein Ausführungsbeispiel der Erfindung wird anhand einer Zeichnung näher erläutert. Darin zeigen:
- Fig. 1: eine Schaumperle im Schnitt,
- Fig. 2: ein aus einer Vielzahl von Schaumperlen nach Fig. 1 zusammengesetztes Formteil,
- Fig. 3: schematisch eine zur Herstellung von Schaumperlen gem. Fig. 1 vorgesehene Coextrusions-Düse im Längsschnitt,
- Fig. 4,5: jeweils schematisch eine Anlage zur Herstellung von Schaumperlen nach Fig. 1, und
- Fig. 6: einige Varianten von Schaumperlen im Längsschnitt.

Gleiche Teile sind in beiden Figuren mit denselben Bezugszeichen versehen.

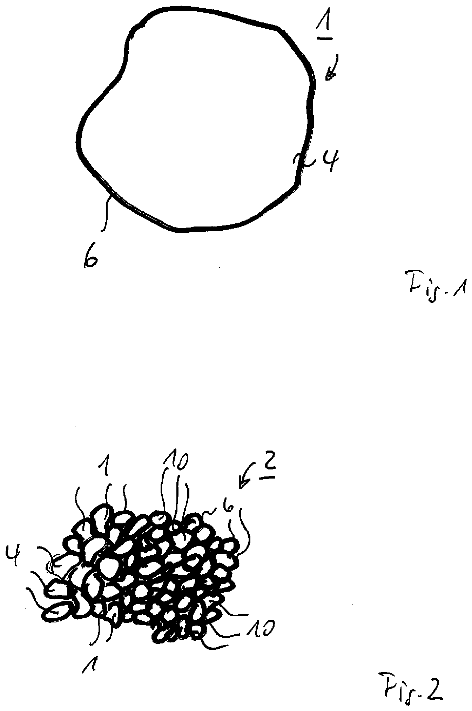

Die Schaumperle 1 gem. Fig. 1 auch als Kugel aus geschäumtem Kunststoff oder auch als "Bead" bezeichnet, ist für eine Vielzahl von Anwendungen, beispielsweise zur Herstellung eines Formteils 2, wie es in Fig. 2 gezeigt ist, geeignet und vorgesehen. Zur Herstellung des Formteil 2 aus einer Vielzahl derartiger Schaumperlen 1 werden diese miteinander versintert oder verschweißt.

Die Schaumperle 1 ist gezielt für ein erweitertes Anwendungsspektrum ausgelegt, bei dem - möglichst unter Rückgriff auf vorhandene Anlagen- und Prozesstechnologien - auch neuartige, bislang aus verschiedenen Gründen nicht für diese Zwecke einsetzbare Materialien für eine mögliche Verwendung zugänglich gemacht werden sollen. Um dies zu ermöglichen, ist die Schaumperle 1 in der Art einer hybriden Ausführung zwei- oder mehrkomponentig ausgeführt; sie umfasst einen von einem ersten Kunststoff gebildeten Kern 4 und zusätzlich zu diesem einen den Kern 4 zumindest teilweise umgebenden, von einem zweiten Kunststoff gebildeten Mantel 6. Durch diese zwei- oder mehrkomponentige Ausführung kann der Kern 4 hinsichtlich Materialwahl und sonstiger Eigenschaften unabhängig vom Mantel 6 ausgeführt sein. Dies wird vorliegend dazu genutzt, auch PET als Basismaterial für die Bereitstellung von Schaumperlen 1 nutzen zu können.

Der Kern 4 der Schaumperle 1 ist somit im Ausführungsbeispiel aus einem Polyester, nämlich vorliegend PET, ausgeführt. Damit können die zahlreichen Vorteile und günstigen Eigenschaften, insbesondere die mögliche Einbindung in die Recyclingkette, auch für Schaumstoffteile nutzbar gemacht werden. Allerdings weist PET einen Schmelzpunkt von etwa 260°C auf, so dass eine Weiterverarbeitung durch Versinterung oder Verschweißung zur Herstellung eines Formteils 2 unter Rückgriff auf gängige Anlagentechnik nicht möglich wäre. In herkömmlichen Formteilanlagen wird nämlich üblicherweise mit Arbeitstemperaturen von etwa 120°C bis 150°C gearbeitet; dies wäre nicht ausreichend, um die für die Herstellung eines Formteils 2 aus PET-Beads notwendige Versinterung der PET-Schaumperlen zu bewirken.

Um hier Abhilfe zu schaffen, ist in der Schaumperle 1 der PET-Kern 4 vom Mantel 6 aus dem zweiten Kunststoff umgeben. Das Material ist dabei derart gewählt, dass der den Mantel 6 bildende zweite Kunststoff einen deutlich niedrigeren Schmelzpunkt aufweist als der den Kern 4 bildende erste Kunststoff. Im Ausführungsbeispiel ist als Material für den Mantel 6 Polypropylen (PP) vorgesehen; die Schaumperle 1 ist somit eine PP-ummantelte PET-Perle. Polypropylen weist einen Schmelzpunkt von etwa 160°C und somit einen deutlich niedrigeren Schmelzpunkt auf als PET. Durch den zweikomponentigen Aufbau der Schaumperle 1 ist somit erreicht, dass die Volumeneigenschaften (beispielsweise Elastizität, thermische Leitfähigkeit etc.) von dem den Kern 4 bildenden Material, also PET, geprägt werden, wohingegen die für die Versinterung oder Verschweißung der Schaumperlen miteinander relevanten Oberflächeneigenschaften durch das den Mantel 6 bildende PP geprägt werden. Bei der Schaumperle 1 handelt es sich somit um eine Schaumperle 1, die im Wesentlichen aus PET besteht, bei der Weiterverarbeitung und Versinterung aber in Rahmenbedingungen und entsprechender Anlagentechnik behandelt werden kann, wie sie für EPP-Beads vorhanden und bereits etabliert ist.

Das durch Versintern oder Verschweißen einer Vielzahl von Schaumperlen 1 erhältliche Formteil 2 ist in Fig. 2 gezeigt. Die vorwiegend stoffschlüssige Verbindung benachbarter Schaumperlen 1 miteinander erfolgt dabei über den jeweiligen Mantel 6, wobei die Kerne 4 erhalten bleiben. Das Formteil 2 nimmt somit nach seiner Herstellung die in Fig. 2 im Schnitt gezeigte Matrixstruktur an, bei der eine Vielzahl von den ursprünglichen Kernen 4 entsprechenden, aus dem ersten Kunststoff, nämlich vorliegend PET, gebildeten geschäumten Kunststoffkörpern 10 in eine von dem zweiten Kunststoff, nämlich vorliegend PP, gebildete Matrix 12 eingebettet ist. Die Matrix 12 entsteht dabei durch das Verschmelzen, Versintern oder Verschweißen der Mäntel 6 der Schaumperlen 1 miteinander.

Die Herstellung von Schaumperlen 1 der dargestellten Ausführung ist auf mehrere Weisen möglich, von denen nachfolgend lediglich beispielhaft zwei jeweils für sich genommen als eigenständig erfinderisch angesehene näher erläutert werden. Den beiden beispielhaft aufgeführten Ausführungsformen ist gemeinsam, dass sie unter Abkehr von den bei der Herstellung von Schaumperlen oder Beads eigentlich gebräuchlichen Wassergranulierungsverfahren auf der Extrusion von Endlossträngen mit nachfolgender Vereinzelung durch Kaltabschlag basieren. Die nachfolgenden Ausführungsformen werden dabei beispielhaft anhand der besonders bevorzugten und als eigenständig erfinderisch angesehenen Materialpaarung von PET als erster Kunststoff zur Bildung der Kerne 4 und Polypropylen (PP) als zweiter Kunststoff zur Bildung der Ummantelung 6 erläutert; selbstverständlich sind, abhängig von den ggf. anwendungsspezifisch vorgegebenen Anforderungen, auch andere Materialpaarungen denkbar und von der vorliegenden Erfindung erfasst.

In einer ersten Ausführungsform zur Herstellung der Schaumperlen 1 wird eine PET-Schmelze zunächst mit einem Treibmittel oder Treibmittelgemisch und gegebenenfalls Additiven vermischt und anschließend einer Coextrusion zugeführt. Insbesondere kann dafür zunächst die Extrusion von Schaumsträngen aus der PET-Schmelze im Dichtebereich 100 - 200 kg/m³ mittels bekannter Extrusionstechnik erfolgen, beispielsweise in der Art einer Extrusion zunächst über eine Zweischnecken-Aufschmelzschnecke mit Begasung und anschließend einer nachgeschalteten Einschneckenanlage zur Homogenisierung.

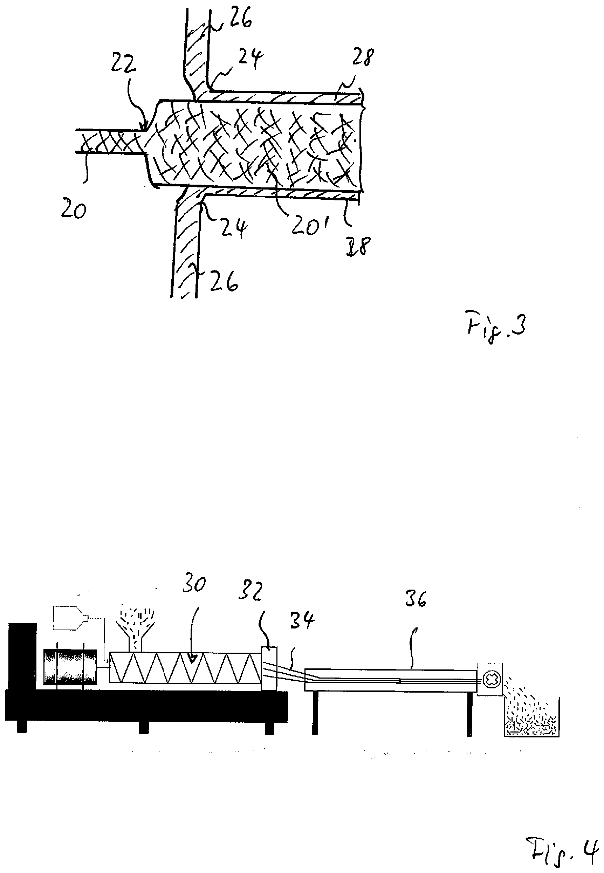

Anschließend ist dann, wie dies schematisch in Fig. 3 gezeigt ist, die Zuführung dieses vorextrudierten PET-Schaumstrangs 20 in eine von einer Coextrusions-Ringdüse 24 umgebene Lochdüse 22 vorgesehen. Die Ringdüse 24 wird dabei mit einem Materialstrom 26 aus Polypropylen (PP) beaufschlagt. Sobald der PET-Schaumstrang 20 aus der Lochdüse 22 austritt, expandiert er auf etwa den doppelten Durchmesser der Lochdüse 22. Der solchermaßen expandierte PET-Schaumstrang 20' wird anschließend im Rahmen der Coextrusion mit einer schlauchförmig aus der Ringdüse 24 austretenden PP-Folie 28 ummantelt.

Unmittelbar nach seinem Austritt aus der Lochdüse 20 weist der expandierte PET-Schaumstrang 20' noch eine vergleichsweise hohe Prozesstemperatur auf. Dadurch wird die PP-Folie 28 bei der Ummantelung fest mit dem geschäumten PET-Strang 20' verschweißt. Damit entsteht eine innige stoffschlüssige Verbindung zwischen dem den Kern 4 bildenden geschäumten PET und dem den Mantel 6 bildenden PP.

Nach einer nachfolgenden Abkühlung, beispielsweise in einem Wasserbad, werden die coextrudierten Stränge, also die PP-ummantelten PET-Schaumstränge, in der Art eines Kaltabschlags vereinzelt und in Zylinder geschnitten. Diese bilden dann die eigentlichen Schaumperlen 1, bei denen ein PP-Mantel 6 den geschäumten PET-Kern 4 ummantelt.

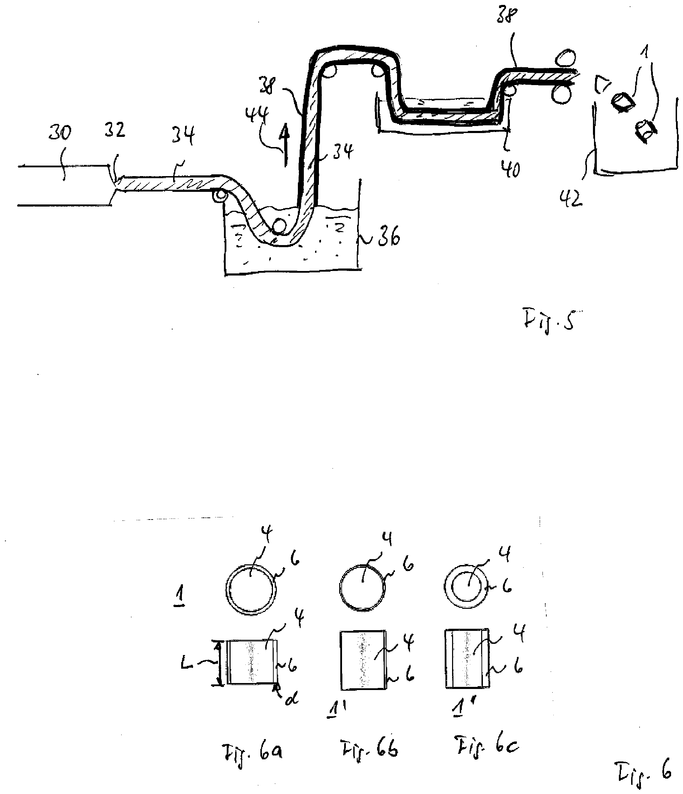

Das Konzept eines alternativen Verfahrens zur Herstellung der Schaumperlen 1 ist anhand der für die Herstellung vorgesehenen Anlage in zwei Ausführungsformen schematisch in den Figs. 4 und 5 gezeigt. In diesen als eigenständig erfinderisch angesehenen Ausgestaltungen wird zunächst ebenfalls eine PET-Schmelze mit einem Treibmittel oder Treibmittelgemisch und gegebenenfalls Additiven vermischt. Das dabei entstehende Gemisch 30 wird anschließend in einer Düse 32 extrudiert und dabei expandiert. Der dabei entstandene PET-Schaumstrang 34 wird nachfolgend in einem Ummantelungsschritt durch ein Behandlungsbecken 36 geführt. Im Behandlungsbecken 36 wird als zweiter Kunststoff Polypropylen (PP) bereitgestellt. Das Behandlungsbecken 36 wird dabei mittels einer nicht näher dargestellten Heizeinrichtung beheizt und geeignet temperiert, so dass das PP im Behandlungsbecken 36 im flüssigen Zustand in hoch viskoser Form vorliegt.

Die Prozessparameter, insbesondere die Prozesstemperatur, werden dabei derart gewählt, dass sich beim Durchführen des PET-Schaumstrangs 34 durch das PP-Bad eine PP-Ummantelung 38 auf der Oberfläche des PET-Schaumstrangs 34 abscheidet. Aufgrund der vergleichsweise hohen Temperaturen des PET-Schaumstrangs 34 in dieser Phase wird die Ummantelung 38 bei der Abscheidung mit dem PET-Schaumstrang 34 fest verschweißt. Anschließend wird der mit der Ummantelung 38 versehene PET-Schaumstrang 34 zur Kühlung durch ein Wasserbad 40 geführt und anschließend in einer Vereinzelungsstation 42 in der Art eines Kaltabschlags vereinzelt und in Zylinder geschnitten. Diese bilden dann die eigentlichen Schaumperlen 1, bei denen ein PP-Mantel 6 den geschäumten PET-Kern 4 ummantelt.

Wie der Darstellung in Fig. 5 deutlich entnehmbar ist, wird in dieser Ausführungsform der mit der Ummantelung 38 versehene PET-Schaumstrang 34 in einer durch den Pfeil 44 angedeuteten, im Wesentlichen senkrechten Richtung aus dem Behandlungsbecken 36 herausgeführt. Dieser Aspekt ist besonders bevorzugt und wird als eigenständig erfinderisch angesehen, denn durch diese Ausrichtung werden überschüssige, noch auf der Oberfläche des Schaumstrangs 34 befindliche Restmengen des Mantelmaterials (PP) schwerkraftbedingt selbsttätig in das Behandlungsbecken 36 zurückgefördert, wo sie zur weiteren Beschichtung zur Verfügung stehen.

Einige besonders bevorzugte Ausführungsbeispiele für die nach einem der genannten Verfahren hergestellten, die Schaumperlen 1 bildenden ummantelten PET-Schaumzylinder sind in Fig. 6, jeweils im sowohl im Quer- als auch im Längsschnitt, gezeigt. Im Hinblick auf die jeweils vorgesehene Anwendung sind dabei insbesondere die Geometrieparameter für den Kern 4 und den Mantel 6 jeweils geeignet gewählt. Die Schaumperle 1 gem. Fig. 6a weist dabei eine Länge L von 3,0 mm und einen Kerndurchmesser von 3,0 mm auf; die Manteldicke d beträgt 0,25 mm. Demgegenüber weisen die Schaumperle 1' gem. Fig. 6b eine Länge L von 4,0 mm, einen Kerndurchmesser von 3,0 mm und eine Manteldicke d von 0,1 mm und die Schaumperle 1" gem. Fig. 6c eine Länge L von 4,0 mm, einen Kerndurchmesser von 2,0 mm und eine Manteldicke d von 0,5 mm auf. Die Geoemtrieparameter dieser besonders bevorzugten Ausführungsbeispiele sind in der folgenden Tabelle zusammengefasst:

| | Schaumperle 1 | Schaumperle 1' | Schaumperle 1" |
|---|---|---|---|
| Kerndurchmesser | 3,0 mm | 3,0 mm | 2,0 mm |
| Länge | 3,0 mm | 4,0 mm | 4,0 mm |
| Gesamtoberfläche Kern | 42,4 mm² | 51,8 mm² | 31,4 mm² |
| Überdeckung: Anteil Mantelfläche | 66,7 % | 72,7 % | 80,0 % |
| Manteldicke | 0,25 mm | 0,1 mm | 0,5 mmm |
| Masse Kern | 2,1 mg | 2,8 mg | 1,3 mg |
| Masse Mantel | 0,7 mg | 0,4 mg | 1,3 mg |
| Massenverhältnis Mantel/Kern | 33,3 % | 13,3 % | 100 % |

Die mit einem der beiden vorstehend beschriebenen - oder auch einem anderweitigen - Verfahren hergestellten, die Schaumperlen 1 bildenden PET- Schaumzylinder mit PP-Ummantelung 38 können anschließend zwischengelagert und ggf., je nach anwendungsbedingtem Bedarf, mit Umgebungsluft unter Druck beladen werden. Das geschäumte zylinderförmige Granulat kann später dann mit normaler, konventioneller EPP-Anlagentechnik weiterverarbeitet werden. Die Dampfdruckund Maschinentechnik ist dabei insbesondere ausreichend, um den PET-Schaumstoff zu expandieren und gleichzeitig aufgrund der Verschweißung in der PP-Ummantelung 38 einen gut verschweißten Partikelschaumblock oder ein gut verschweißtes Formteil 2 zu erhalten.

Die Bauweise der Schaumperlen 1 als PP-ummantelte PET-Perle erlaubt unter Anderem folgende Spielräume für die nachfolgende Anwendung und erweitert damit das Anwendungsspektrum insgesamt:
Der geschäumte zylindrische Rohstoff kann dabei je nach Bedarf auch in relativ hohen Dichten im Bereich 100 - 200 kg/m³ hergestellt werden.

Der PET-Schaumkern 4 kann bei Bedarf im Vorschäumverfahren bei Temperaturen von etwa 120°C vorgeschäumt werden, ohne dass die PP-Ummantelung 38 eine Verschweißung der Schaumperlen 1 verursachen würde.

Die Schaumperlen 1 können wie herkömmliche EPS- oder EPP-Beads zwischengelagert und ggf. mit Pressluft beladen werden.

Die Schaumperlen 1 können herkömmlichen EPP-Formteilanlagen zugeführt und dort verarbeitet werden, insbesondere mit Dampf im Temperaturbereich von etwa 150°C verschäumt und verschweißt werden.

Insgesamt gesehen wird die EPP-Schaumindustrie in die Lage versetzt, mit bestehender Technik E-PET zu verarbeiten und neue Anwendungsbereiche zu erschlie-ßen.

### Bezugszeichenliste

- 1: Schaumperle
- 2: Formteil
- 4: Kern
- 6: Mantel
- 10: Kunststoffkörper
- 12: Matrix
- 20,20': Schaumstrang
- 22: Lochdüse
- 24: Ringdüse
- 26: Materialstrom
- 28: Folie
- 30: Gemisch
- 32: Düse
- 34: Schaumstrang
- 36: Behandlungsbecken
- 38: Ummantelung
- 40: Wasserbad
- 42: Vereinzelungsstation
- 44: Pfeil

- L: Länge
- D: Durchmesser
- d: Manteldicke

## Patentansprüche

1. Schaumperle (1) mit einem von einem ersten Kunststoff auf Basis von Polyethylenterephthalat (PET) gebildeten Kern (4) und mit einem den Kern (4) zumindest teilweise umgebenden, von einem zweiten Kunststoff gebildeten Mantel (6), wobei der den Mantel (6) bildende zweite Kunststoff bei einem Umgebungsdruck von etwa 1 bis 5 bar, insbesondere in Dampfatmosphäre, einen um mindestens etwa 90°C niedrigeren Schmelzpunkt aufweist als der den Kern (4) bildende erste Kunststoff.

2. Schaumperle (1) nach Anspruch 1, bei der der den Mantel (6) bildende zweite Kunststoff ein Kunststoff auf Basis von Polypropylen (PP) ist.

3. Schaumperle (1) nach Anspruch 1 oder 2, bei der der Mantel (6) die Oberfläche des Kerns (4) zu mindestens 65% bedeckt.

4. Schaumperle (1) nach einem der Ansprüche 1 bis, bei der der Mantel (6) eine Schichtdicke von 0,1 bis 0,5 mm aufweist.

5. Formteil (2), insbesondere zur Verwendung im/als Dämmstoff für Sanitär-Heizungs- oder Lüftungstechnik (Warmwasserrohrisolierung, Heizkesssel, Gussteile), Dämmstoff für Automobilbau (Schall- und wärmedämmende Teile wie z.B. Motorraumabtrennungen, Radkästen), Crashschutz für Automobilbau (Stoßfänger), und/oder Crashschuz für Schutzausrüstungen (Helme, Knieschoner), gebildet aus einer Vielzahl von oberflächlich miteinander versinterten oder verschweißten Schaumperlen (1) nach einem der Ansprüche 1 bis 4.

6. Verfahren zur Herstellung von Schaumperlen (1) nach einem der Ansprüche 1 bis 4, bei dem eine Schmelze eines ersten Kunststoffs mit einem Treibmittel oder Treibmittelgemisch und gegebenenfalls Additiven vermischt und für eine nachfolgende Extrusion bereitgestellt wird, wobei die Extrusion in einer Coextrusion erfolgt, bei der der aus einer Lochdüse (22) austretende geschäumte erste Kunststoff expandiert und dabei von einem aus einer die Lochdüse (22) zumindest teilweise umgebenden Ringdüse (24) austretenden zweiten Kunststoff ummantelt wird, **dadurch gekennzeichnet, dass** der dabei entstehende, von einer Folie (28) aus dem zweiten Kunststoff ummantelte Strang (20) des ersten Kunststoffs nach Abkühlung in Zylinder geschnitten wird.

7. Verfahren zur Herstellung von Schaumperlen (1) nach einem der Ansprüche 1 bis 4, bei dem eine Schmelze eines ersten Kunststoffs mit einem Treibmittel oder Treibmittelgemisch und gegebenenfalls Additiven vermischt und anschließend extrudiert und dabei expandiert wird,
**dadurch gekennzeichnet, dass** der entstandene Kunststoff-Schaumstrang (34) in einem Ummantelungsschritt durch ein Behandlungsbecken (36) geführt wird, in dem ein zweiter Kunststoff bereitgestellt wird.

8. Verfahren zur Herstellung von Schaumperlen (1) nach einem der Ansprüche 1 bis 4, bei dem eine Schmelze eines ersten Kunststoffs mit einem Treibmittel oder Treibmittelgemisch und gegebenenfalls Additiven vermischt wird, **dadurch gekennzeichnet, dass** die mit dem Treibmittel beladene Polymerschmelze in einem Ummantelungsschritt durch einen Fließkanal geführt wird, in dem eine Schmelze eines zweiten Kunststoffs bereitgestellt wird und die mit dem Treibmittel beladene Polymerschmelze umströmt, wobei die dabei entstehende ummantelte Schmelze anschließend extrudiert und dabei expandiert wird.

## Claims

1. A foam bead (1) with a core (4) formed by a first plastic based on polyethylene terephthalate (PET) and with a shell (6) which at least partially surrounds the core (4) and is formed by a second plastic, wherein the second plastic forming the shell (6) has a melting point at an ambient pressure of approximately 1 to 5 bar, in particular in a steam atmosphere, which is at least approximately 90°C lower than that of the first plastic forming the core (4).

2. The foam bead (1) as claimed in claim 1, in which the second plastic forming the shell (6) is a plastic based on polypropylene (PP).

3. The foam bead (1) as claimed in claim 1 or claim 2, in which the shell (6) covers at least 65% of the surface of the core (4).

4. The foam bead (1) as claimed in one of claims 1 to 3, in which the shell (6) has a layer thickness of 0.1 to 0.5 mm.

5. A moulded part (2), in particular for use in or as an insulating material for sanitary, heating or ventilation technologies (hot water pipe insulation, boilers, castings), insulating material for automotive engineering (sound insulating and heat insulating parts such as engine compartment partitions, wheel housings, for example), crash protection for automotive engineering, (bumpers), and/or crash protection for protective equipment (helmets, kneepads), formed from a plurality of foam beads (1) as claimed in one of claims 1 to 4 sintered or welded together at the surface.

6. A process for the production of foam beads (1) as claimed in one of claims 1 to 4, in which a melt of a first plastic is mixed with a blowing agent or blowing agent mixture and additives if appropriate and provided for subsequent extrusion, wherein
the extrusion is carried out in a coextrusion step during which the foamed first plastic emerging from a perforated die (22) expands and is thereby encased with a second plastic emerging from an annular die (24) which at least partially surrounds the perforated die (22), **characterized in that** the rod (20) of the first plastic which is generated thereby, which is sheathed with a film (28) of the second plastic, is cut into cylinders following cooling.

7. A process for the production of foam beads (1) as claimed in one of claims 1 to 4, in which a melt of a first plastic is mixed with a blowing agent or blowing agent mixture and additives if appropriate and is then extruded and thereby expanded,
**characterized in that** in a sheathing step, the plastic foam strand (34) which is generated is passed through a treatment tank (36) in which a second plastic is provided.

8. A process for the production of foam beads (1) as claimed in one of claims 1 to 4, in which a melt of a first plastic is mixed with a blowing agent or blowing agent mixture and additives if appropriate,
**characterized in that** in a sheathing step, the polymer melt charged with the blowing agent is passed through a flow channel in which a melt of a second plastic is provided and which flows around the polymer melt charged with the blowing agent, wherein the sheathed melt which is formed thereby is subsequently extruded and expanded thereby.

## Revendications

1. Perles de mousse (1) avec un noyau (4) formé par une première matière plastique à base de polyéthylène téréphtalate (PET) et avec une enveloppe (6) entourant au moins en partie le noyau (4), formée par une deuxième matière plastique, sachant que la deuxième matière plastique formant l'enveloppe (6) comporte, à une pression ambiante d'environ 1 à 5 bars, en particulier dans une atmosphère de vapeur, un point de fusion d'au moins à peu près 90°C plus bas que la première matière plastique formant le noyau (4).

2. Perles de mousse (1) selon la revendication 1, pour lesquelles la deuxième matière plastique formant l'enveloppe (6) est une matière plastique à base de polypropylène (PP).

3. Perles de mousse (1) selon la revendication 1 ou 2, pour lesquelles l'enveloppe (6) recouvre la surface du noyau (4) sur au moins 65 %.

4. Perles de mousse (1) selon l'une quelconque des revendications 1 à 3, pour lesquelles l'enveloppe (6) comporte une épaisseur de couche de 0,1 à 0,5 mm.

5. Pièce moulée (2), en particulier pour utilisation dans/en tant que matière isolante dans la cadre de la technique sanitaire, de chauffage ou d'aération (isolation des conduits d'eau chaude, chaudières, pièces moulées), matière isolante dans le secteur automobile (pièces insonorisantes et calorifuges, comme par ex. : séparations de compartiment moteur, passages de roues), protection contre les chocs dans la construction automobile (pare-chocs), et/ou protection contre les chocs pour les équipements de protection (casques, protections des genoux), formée à partir d'une pluralité de perles de mousse (1) frittées ou soudées en surface les unes aux autres selon l'une quelconque des revendication 1 à 4.

6. Procédé de fabrication de perles de mousse (1) selon l'une quelconque des revendications 1 à 4, pour lequel une masse fondue d'une première matière plastique est mélangée avec un agent moussant ou un mélange d'agents moussants et le cas échéant des additifs et est préparée pour une extrusion ultérieure, sachant que
l'extrusion a lieu dans une coextrusion pour laquelle la première matière plastique en mousse sortant d'une buse à trous (22) est expansée et est à cet effet enveloppée par une deuxième matière plastique sortant d'une buse annulaire (24) entourant au moins en partie la buse à trous (22), **caractérisé en ce que** le cordon (20) de la première matière plastique se créant à cet effet, enveloppé par une feuille (28) de la deuxième matière plastique, est découpé après refroidissement en cylindres.

7. Procédé de fabrication de perles de mousse (1) selon l'une quelconque des revendications 1 à 4, pour lequel une masse fondue d'une première matière plastique est mélangée à un agent moussant ou un mélange d'agents moussants et le cas échéant à des additifs et est ensuite extrudée et expansée à cet effet,
**caractérisé en ce que** le cordon de mousse de matière plastique (34) créé est passé dans une phase d'enveloppement par une bac de traitement (36) dans laquelle est préparée une deuxième matière plastique.

8. Procédé de fabrication de perles de mousse (1) selon l'une quelconque des revendications 1 à 4, pour lequel une masse fondue d'une première matière plastique est mélangée à agent moussant ou un mélange d'agents moussants et le cas échéant à des additifs,
**caractérisé en ce que** la masse fondue de polymère chargée en agent moussant est passée dans une phase d'enveloppement par un conduit d'écoulement, dans laquelle est préparée une masse fondue d'une deuxième matière plastique et qui contourne la masse fondue de polymère chargée en agent moussant, sachant que la masse fondue enveloppée créée à cet effet est ensuite extrudée et expansée à cet effet.
